# FASCICULE DE BREVET EUROPEEN

(11) **EP 2 663 615 B1**
(45) Date de publication et mention de la délivrance du brevet: **25.02.2015**
(21) Numéro de dépôt: 11813334.7
(22) Date de dépôt: 20.12.2011
(51) Int. Cl.: C10G 65/00, C10G 65/04

(54) **PROCÉDÉ D'HYDROTRAITEMENT DE CHARGES LOURDES D'HYDROCARBURES AVEC DES REACTEURS PERMUTABLES INCLUANT AU MOINS UNE ETAPE DE PERMUTATION PROGRESSIVE**
VERFAHREN ZUR WASSERSTOFFBEHANDLUNG VON SCHWEREN KOHLENWASSERSTOFFEINSÄTZEN UNTER VERWENDUNG PERMUTIERBARER REAKTOREN MIT MINDESTENS EINEM SCHRITT ZUR SCHRITTWEISEN PERMUTATION
METHOD FOR HYDROTREATING HEAVY HYDROCARBON FEEDSTOCKS USING PERMUTABLE REACTORS, INCLUDING AT LEAST ONE STEP OF GRADUAL PERMUTATION

(30) Priorité: 10.01.2011 FR 1100075
(43) Date de publication de la demande: 20.11.2013
(73) Titulaire: IFP Energies nouvelles, 92852 Rueil-Malmaison Cedex (FR)
(72) Inventeur: BAZER-BACHI, Frédéric, 69230 Saint Genis-laval (FR); DIGNE, Mathieu, 69007 Lyon (FR); VERSTRAETE, Jan, 69008 Lyon (FR); MARCHAL, Nicolas, 57310 Bertrange (FR); PLAIN, Cécile, 78100 Saint Germain En Laye (FR)
(86) Numéro de dépôt international: PCT/FR2011/000667
(87) Numéro de publication internationale: WO 2012/095565

(56) Documents cités:
- FR-A1- 2 681 871

## Description

La présente invention concerne un procédé d'hydrotraitement d'une fraction lourde d'hydrocarbures utilisant un système de zones de garde permutables en lits fixes contenant chacune au moins un lit catalytique incluant au moins une étape au cours de laquelle le flux de la charge alimentant la première zone de garde mise en contact avec la charge est en partie basculé vers la prochaine zone de garde en aval, de préférence de façon progressive.

L'hydrotraitement des charges hydrocarbonées prend une importance de plus en plus grande dans la pratique du raffinage avec la nécessité croissante de réduire la quantité de soufre dans les coupes pétrolières et de convertir des fractions lourdes en fractions plus légères valorisables en tant que carburants et/ou produits chimiques. Il est en effet nécessaire, au vu des normes imposées par chaque pays pour les carburants commerciaux, de valoriser au mieux les bruts importés de plus en plus riches en fractions lourdes, en hétéroatomes et en métaux et de plus en plus pauvre en hydrogène.

L'hydrotraitement catalytique permet, par la mise en contact d'une charge hydrocarbonée avec un catalyseur et en présence d'hydrogène, de réduire sensiblement sa teneur en asphaltènes, métaux, soufre et autres impuretés tout en améliorant le rapport hydrogène sur carbone (H/C) et tout en la transformant plus ou moins partiellement en coupes plus légères. On entend ainsi par hydrotraitement (HDT) notamment des réactions d'hydrodésulfuration (HDS) par lesquelles on désigne les réactions permettant d'enlever du soufre de la charge avec production d'H₂S, des réactions d'hydrodésazotation (HDN) par lesquelles on désigne les réactions permettant d'enlever l'azote de la charge avec production de NH₃, et des réactions d'hydrodémétallation par lesquelles on désigne les réactions permettant d'enlever les métaux de la charge par précipitation, mais aussi l'hydrogénation, l'hydrodéoxygénation, l'hydrodéaromatisation, l'hydroisomérisation, l'hydrodéalkyla-tion et l'hydrodéasphaltage.

Deux types de procédé d'hydrotraitement permettant le traitement de charges lourdes telles que des résidus atmosphériques (RA) ou sous vide (RSV) existent : les procédés en lit fixe et les procédés en lit bouillonnant. Zong et al. (Recent Patents on Chemical Engineering, 2009, 2, 22-36) résument les différents procédés connus dans le traitement de charges pétrolières lourdes.

La technologie des procédés à lit fixe est industriellement la plus répandue en raison de sa maturité technique, un coût moindre et une performance stable et fiable. Dans de tels procédés, la charge circule à travers plusieurs réacteurs à lit fixe disposés en série, le ou les premiers réacteurs étant utilisés pour y réaliser surtout l'hydrodémétallation de la charge (étape dite d'HDM) ainsi qu'une partie de l'hydrodésulfuration, le ou les derniers réacteurs étant utilisés pour y réaliser le raffinage profond de la charge (étape d'hydrotraitement HDT), et en particulier l'hydrodésulfuration (étape dite d'HDS). Les effluents sont soutirés du dernier réacteur d'HDT.
Les procédés en lit fixe conduisent à des performances en raffinage élevées (production de coupes 370°C⁺ avec moins de 0,5% poids de soufre et contenant moins de 20 ppm de métaux) à partir de charge contenant jusqu'à 5% poids de soufre et jusqu'à 300 ppm de métaux, notamment du nickel et du vanadium). Les différents effluents ainsi obtenus peuvent servir de bases pour la production de fiouls lourds de bonne qualité, de gazole et d'essence, ou de charges pour d'autres unités telles que le craquage catalytique.
Au-delà de cette teneur en métaux, il est connu que les premiers lits catalytiques peuvent se désactiver rapidement en raison de l'important dépôt de métaux qui se produit. Pour compenser cette désactivation, la température du réacteur est alors augmentée. Néanmoins, cette augmentation de la température favorise le dépôt de coke accélérant les processus de colmatage intragranulaire (bouchage de la porosité du catalyseur) et extragranulaire (bouchage du lit catalytique). Au-delà de telles teneurs en métaux dans la charge, des procédés en lit bouillonnant sont ainsi généralement préférés. En effet, un problème posé par l'hydrotraitement catalytique en lit fixe de ces charges vient de ce que, lors des réactions d'hydrotraitement de fractions pétrolières contenant des complexes organométalliques, la plupart de ces complexes se détruisent en présence d'hydrogène, d'hydrogène sulfuré, et d'un catalyseur d'hydrotraitement. Le métal constitutif de ces complexes précipite alors sous la forme d'un sulfure solide qui vient se fixer sur le catalyseur. C'est en particulier le cas des complexes du vanadium, du nickel, du fer, du sodium, du titane, du silicium et du cuivre qui sont naturellement présents dans les pétroles bruts en plus ou moins grande importance selon l'origine du pétrole, et qui, lors des opérations de distillation ont tendance à se concentrer dans les fractions à point d'ébullition élevé et en particulier dans les résidus. Au dépôt de ces impuretés s'ajoute aussi celui du coke, l'ensemble tend alors à désactiver et colmater rapidement le système catalytique. Ces phénomènes conduisent à des arrêts des unités d'hydrotraitement pour le remplacement des solides et à une surconsommation de catalyseur que l'homme du métier souhaite minimiser.

Un autre problème posé par l'hydrotraitement catalytique en lit fixe de ces charges est le colmatage. Il est connu que les lits catalytiques, notamment les parties supérieures des lits catalytiques, et plus particulièrement les parties supérieures du premier lit catalytique en contact avec la charge, sont susceptibles de se colmater assez rapidement à cause des asphaltènes et sédiments contenus dans la charge, ce qui s'exprime dans un premier temps par une augmentation de la perte de charge et nécessite tôt ou tard un arrêt de l'unité pour le remplacement du catalyseur.

Il s'ensuit donc qu'on est conduit à arrêter l'unité pour remplacer les premiers lits catalytiques désactivés et/ou colmatés. Les procédés d'hydrotraitement de ce type de charges doivent donc être conçus de façon à permettre un cycle d'opération le plus long possible sans arrêter l'unité.

### Etat de l'art

On a cherché à résoudre ces inconvénients des agencements en lits fixes de différentes manières, notamment en utilisant des lits de garde agencés en amont des réacteurs principaux. La principale tache des lits de garde est de protéger les catalyseurs des réacteurs principaux d'hydrotraitement en aval en effectuant une partie de la démétallation et en filtrant les particules contenues dans la charge qui peuvent conduire au colmatage. Les lits de garde sont généralement intégrés dans la section HDM dans un procédé d'hydrotraitement de charges lourdes incluant généralement une première section d'HDM, puis une deuxième section d'HDT. Bien que les lits de garde soient généralement utilisés pour effectuer une première hydrodémétallation et un filtrage, d'autres réactions d'hydrotraitement (HDS, HDN...) auront inévitablement lieu dans ces réacteurs grâce à la présence d'hydrogène et d'un catalyseur.

On a ainsi pensé à installer un ou plusieurs réacteurs en lit mobile en tête de l'étape HDM (US3910834 ou GB2124252). Ces lits mobiles peuvent marcher a co-courant (procédé HYCON de SHELL par exemple) ou a contre-courant (procédé OCR de Chevron Lummus Global et procédé HYVAHL-M™ de la demanderesse par exemple).

On a aussi pensé à ajouter un réacteur de garde en lit fixe devant les réacteurs d'HDM (US4118310 et US3968026). Le plus souvent ce réacteur de garde peut être court-circuité par utilisation notamment d'une vanne d'isolement. On obtient ainsi une protection temporaire des réacteurs principaux contre le colmatage.

De même, il a également été décrit, par la demanderesse notamment (FR2681871 et US5417846), un système permettant d'associer les hautes performances du lit fixe avec un facteur opératoire élevé pour le traitement de charges à teneurs élevées en métaux qui consiste en un procédé d'hydrotraitement en au moins deux étapes d'une fraction lourde d'hydrocarbures contenant des asphaltènes, des impuretés soufrées et des impuretés métalliques dans lequel au cours de la première étape dite d'HDM on fait passer, dans des conditions d'HDM, la charge d'hydrocarbures et d'hydrogène sur un catalyseur d'HDM, puis au cours de la deuxième étape subséquente on fait passer, dans des conditions d'HDT, l'effluent de la première étape sur un catalyseur d'HDT. L'étape d'HDM comprend une ou plusieurs zones d'HDM en lits fixes précédées d'au moins deux zones de garde d'HDM, appelées aussi « réacteurs permutables », également en lits fixes, disposées en série pour être utilisées de façon cyclique consistant en la répétition successive des étapes b) et c) définies ci-après :
a) une étape, dans laquelle les zones de garde sont utilisées toutes ensembles pendant une durée au plus égale au temps de désactivation et/ou de colmatage de l'une d'entre elles,
b) une étape, durant laquelle la zone de garde désactivée et/ou colmatée est court-circuitée et le catalyseur qu'elle contient est régénéré et/ou remplacé par du catalyseur frais et durant laquelle la ou les autres zone(s) de garde sont utilisée(s),
c) une étape, durant laquelle les zones de garde sont utilisées toutes ensembles, la zone de garde dont le catalyseur a été régénéré au cours de l'étape précédente étant reconnectée et ladite étape étant poursuivie pendant une durée au plus égale au temps de désactivation et/ou de colmatage de l'une des zones de garde.
Ce procédé, connu sous le nom de HYVAHL-F™, permet d'atteindre une désulfuration globale supérieure à 90% et une démétallation globale de l'ordre de 95%. L'utilisation des réacteurs permutables permet un fonctionnement cyclique en continu.

On a maintenant découvert de façon surprenante qu'il est possible d'augmenter la durée d'utilisation des réacteurs permutables avant que le remplacement du catalyseur contenu dans les réacteurs permutables devienne nécessaire. La présente invention améliore ainsi les performances des réacteurs permutables telles que décrit par la demanderesse dans le brevet FR2681871, en intégrant, après les étapes au cours desquelles la charge traverse successivement toutes les zones de garde, des étapes supplémentaires, dans lesquelles le flux de charge alimentant la première zone de garde mise en contact avec la charge est en partie basculé vers la prochaine zone de garde, et ceci de préférence de façon progressive. Ainsi, pendant ces étapes supplémentaires, la charge est simultanément introduite sur deux zones de garde voisines. Ce basculement de flux permet de retarder la montée de la perte de charge de la première zone de garde mise en contact avec la charge et allonge ainsi sa durée de vie. L'introduction d'une partie de la charge sur une prochaine zone en aval alors qu'une autre partie de la charge continue à traverser la première zone mise en contact avec la charge permet de court-circuiter et donc de « soulager » la première zone de garde. La partie de la charge introduite dans la prochaine zone en aval traverse ainsi une zone beaucoup moins colmatée et/ou désactivée que la première zone.
De même, plusieurs facteurs opératoires concernant la façon d'effectuer ce basculement, notamment le moment du début de l'étape de basculement, la quantité de la charge introduite sur la prochaine zone en début de l'étape de basculement et sa progression d'introduction par la suite, permettent d'optimiser le temps de fonctionnement de chaque zone de garde et donc de prolonger le cycle global des réacteurs permutables.
Cette prolongation du cycle entraîne une augmentation du facteur opératoire de l'unité ainsi qu'une économie de temps, une réduction des coûts opératoires et une réduction de la consommation du catalyseur frais. L'objectif de la présente invention est ainsi d'augmenter la durée du cycle des zones de garde.

### Description détaillée

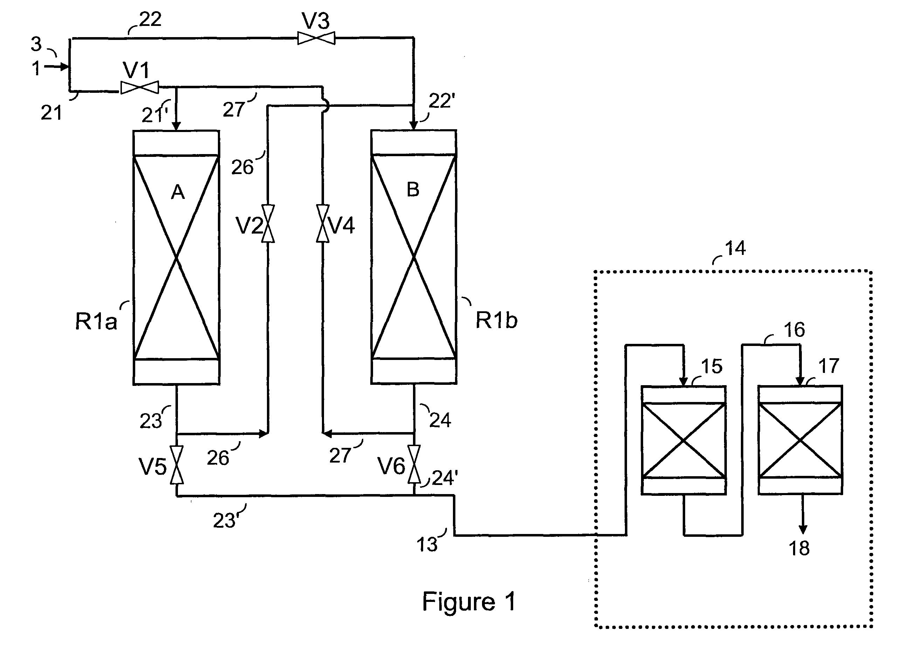

La présente invention présente une amélioration du procédé d'hydrotraitement effectué par les zones de garde (réacteurs permutables) tel que décrit dans le brevet FR2681871. Le fonctionnement des zones de garde selon FR2681871 est décrit dans la figure 1 comportant deux zones de garde (ou réacteurs permutables) R1a et R1b. Ce procédé comprend une série de cycles comportant chacun quatre étapes successives :
- une première étape (dénommée par la suite "étape a") au cours de laquelle la charge traverse successivement le réacteur R1a, puis le réacteur R1b,
- une deuxième étape (dénommée par la suite "étape b") au cours de laquelle la charge traverse uniquement le réacteur R1b, le réacteur R1a étant court-circuité pour régénération et/ou remplacement du catalyseur,
- une troisième étape (dénommée par la suite "étape c") au cours de laquelle la charge traverse successivement le réacteur R1b, puis le réacteur R1a,
- une quatrième étape (dénommée par la suite "étape d") au cours de laquelle la charge traverse uniquement le réacteur R1a, le réacteur R1b étant court-circuité pour régénération et/ou remplacement du catalyseur.

Au cours de l'étape a) du procédé, la charge est introduite par la ligne 3 et la ligne 21 comportant une vanne V1 ouverte vers la ligne 21' et le réacteur de garde R1a renfermant un lit fixe A de catalyseur. Durant cette période les vannes V3, V4 et V5 sont fermées. L'effluent du réacteur R1a est envoyé par la conduite 23, la conduite 26 comportant une vanne V2 ouverte et la conduite 22' dans le réacteur de garde R1b renfermant un lit fixe B de catalyseur. L'effluent du réacteur R1b est envoyé par les conduites 24 et 24' comportant une vanne V6 ouverte et la conduite 13 à la section d'hydrotraitement principale 14.
Au cours de l'étape b) du procédé les vannes V1, V2, V4 et V5 sont fermées et la charge est introduite par la ligne 3 et la ligne 22 comportant une vanne V3 ouverte vers la ligne 22' et le réacteur R1b. Durant cette période l'effluent du réacteur R1b est envoyé par les conduites 24 et 24' comportant une vanne V6 ouverte et la conduite 13 à la section d'hydrotraitement principale 14.
Au cours de l'étape c) les vannes V1, V2 et V6 sont fermées et les vannes V3, V4 et V5 sont ouvertes. La charge est introduite par la ligne 3 et les lignes 22 et 22' vers le réacteur R1 b. L'effluent du réacteur R1 b est envoyé par la conduite 24, la conduite 27 comportant une vanne V4 ouverte et la conduite 21' dans le réacteur de garde R1a. L'effluent du réacteur R1a est envoyé par les conduites 23 et 23' comportant une vanne V5 ouverte et la conduite 13 à la section d'hydrotraitement principale 14. Au cours d'étape d) les vannes V2, V3, V4 et V6 sont fermées et les vannes V1 et V5 sont ouvertes. La charge est introduite par la ligne 3 et les lignes 21 et 21' vers le réacteur R1a. Durant cette période l'effluent du réacteur R1a est envoyé par les conduites 23 et 23' comportant une vanne V5 ouverte et la conduite 13 à la section d'hydrotraitement principale 14.
Le cycle recommence ensuite de nouveau. Les opérations sur les vannes de l'unité permettant le fonctionnement des réacteurs permutables selon FR2681871 sont reportées au tableau 1.

**Tableau 1 : Opérations sur les vannes autour des réacteurs permutables selon FR2681871**

| Étape Cycle | | Intervention | V1 | V2 | V3 | V4 | V5 | V6 |
|---|---|---|---|---|---|---|---|---|
| a | R1A + R1B | - | O* | O | F** | F | F | O |
| b | R1B | R1A | F | F | O | F | F | O |
| c | R1B + R1A | - | F | F | O | O | O | F |
| d | R1A | R1B | O | F | F | F | O | F |
| a | R1A + R1B | - | O | O | F | F | F | O |

| | | | | | | | | |
|---|---|---|---|---|---|---|---|---|
| * O = ouvert, **F = fermé | | | | | | | | |

La présente invention améliore le fonctionnement des zones de garde décrit par l'état de la technique en intégrant dans ce procédé, après les étapes au cours desquelles la charge traverse successivement toutes les zones de garde, des étapes supplémentaires, dans lesquelles le flux de charge alimentant la première zone de garde mise en contact avec la charge est en partie basculé vers la prochaine zone de garde en aval, et ceci de préférence de façon progressive.

Plus particulièrement, la présente invention concerne un procédé d'hydrotraitement d'une fraction lourde d'hydrocarbures contenant des asphaltènes, des sédiments, des impuretés soufrées, azotées et métalliques, dans lequel on fait passer, dans des conditions d'hydrotraitement, la charge d'hydrocarbures et d'hydrogène sur un catalyseur d'hydrotraitement, dans au moins deux zones de garde d'hydrotraitement en lits fixes contenant chacune au moins un lit catalytique, les zones de garde étant disposées en série pour être utilisées de façon cyclique consistant en la répétition successive des étapes b), c) et c') définies ci-après :
- une étape a) durant laquelle la charge traverse toutes les zones de garde pendant une fraction du temps de désactivation et/ou de colmatage de la première zone de garde mise en contact avec la charge,
- une étape a') durant laquelle une partie de la charge continue à traverser la première zone de garde mise en contact avec la charge et une autre partie de la charge est introduite dans la prochaine zone de garde en aval pendant une durée au plus égale au temps de désactivation et/ou de colmatage de la première zone de garde mise en contact avec la charge,
- une étape b) durant laquelle la zone de garde désactivée et/ou colmatée est court-circuitée et le catalyseur qu'elle contient est régénéré et/ou remplacé par du catalyseur frais et durant laquelle la ou les autres zone(s) de garde sont utilisée(s),
- une étape c) durant laquelle la charge traverse toutes les zones de garde, la zone de garde dont le catalyseur a été régénéré au cours de l'étape précédente étant reconnectée de manière à être en aval de l'ensemble des autres zones de gardes et ladite étape étant poursuivie pendant une fraction du temps de désactivation et/ou de colmatage de la première zone de garde mise en contact avec la charge,
- une étape c') durant laquelle une partie de la charge continue à traverser la première zone de garde mise en contact avec la charge et une autre partie de la charge est introduite dans la prochaine zone de garde en aval pendant une durée au plus égale au temps de désactivation et/ou de colmatage de la première zone de garde mise en contact avec la charge.

Les zones de garde, notamment la première zone de garde mise en contact avec la charge, se chargent progressivement en métaux, coke, sédiments et autres impuretés diverses. Lorsque le catalyseur ou les catalyseurs qu'elles contiennent est/sont pratiquement saturé(s) en métaux et impuretés diverses, les zones doivent être déconnectées pour effectuer le remplacement ou la régénération de catalyseur(s), De préférence, les catalyseurs sont remplacés. Ce moment est appelé temps de désactivation et/ou de colmatage. Bien que le temps de désactivation et/ou de colmatage varie en fonction de la charge, des conditions opératoires et du ou des catalyseurs utilisés, il s'exprime d'une manière générale par une chute de la performance catalytique (une augmentation de la concentration de métaux et/ou d'autres impuretés dans l'effluent), une augmentation de la température nécessaire pour le maintien d'un hydrotraitement constant ou, dans le cas spécifique d'un colmatage, par une augmentation significative de la perte de charge. La perte de charge Δp, exprimant un degré de colmatage, est mesurée en permanence durant tout le cycle sur chacune des zones et peut se définir par une augmentation de pression résultant du passage partiellement bloqué à travers de la zone. De même, la température est mesurée en permanence durant tout le cycle sur chacune des deux zones.
Afin de définir un temps de désactivation et/ou de colmatage, l'homme du métier définit au préalable une valeur maximalement tolérable de la perte de charge Δp et/ou de la température en fonction de la charge à traiter, des conditions opératoires et catalyseurs choisis, et à partir de laquelle il faut procéder à la déconnection de la zone de garde. Le temps de désactivation et/ou de colmatage se définit ainsi comme le temps où la valeur limite de la perte de charge et/ou de la température est atteinte. La valeur limite de la perte de charge et/ou de la température est en règle générale confirmée lors de la première mise en service des réacteurs. Dans le cas d'un procédé d'hydrotraitement de fractions lourdes, la valeur limite de la perte de charge se situe généralement entre 0.3 et 1 MPa (3 et 10 bars), de préférence entre 0.5 et 0.8 MPa (5 et 8 bars). La valeur limite de la température se situe généralement entre 400°C et 430°C, la température correspondant, ici et dans la suite du texte, à la température moyenne mesurée du lit catalytique. Une autre valeur limite sur les températures, indiquant que la désactivation est atteinte (moins de réactions exothermiques), est que l'écart de température (ΔT) sur un lit catalytique devient inférieur à 5 °C, et ce indépendamment de la valeur de la température moyenne.

Selon la présente invention, le flux de charge alimentant la première zone de garde mise en contact avec la charge est en partie basculé vers la prochaine zone de garde en aval avant le temps de désactivation et/ou de colmatage.

Le procédé selon l'invention est décrit à l'aide de la figure 1 utilisant un système de deux zones de gardes permutables. Ce procédé comprend une série de cycles comportant chacun six étapes successives :
- une étape a) durant laquelle la charge traverse successivement les zones de garde R1a et R1b pendant une fraction du temps de désactivation et/ou de colmatage de la zone R1a,
- une étape a') (étape de basculement) durant laquelle une partie de la charge continue à traverser la zone R1a et une autre partie de la charge est introduite dans la zone R1b pendant une durée au plus égale au temps de désactivation et/ou de colmatage de la zone R1a,
- une étape b) au cours de laquelle la charge traverse le réacteur R1b uniquement, le réacteur R1a étant court-circuité pour régénération et/ou remplacement du catalyseur,
- une étape c) durant laquelle la charge traverse successivement les zones R1b et R1a pendant une fraction du temps de désactivation et/ou de colmatage de R1b,
- une étape c') (étape de basculement) durant laquelle une partie de la charge continue à traverser la zone R1b et une autre partie de la charge est introduite dans la zone R1a pendant une durée au plus égale au temps de désactivation et/ou de colmatage de la zone R1 b,
- une étape d) au cours de laquelle la charge traverse le réacteur R1a uniquement, le réacteur R1b étant court-circuité pour régénération et/ou remplacement du catalyseur.

Au cours de l'étape a) du procédé, la charge est introduite par la ligne 3 et les lignes 21 et 21' comportant une vanne V1 ouverte vers le réacteur de garde R1a renfermant un lit fixe A de catalyseur. Durant cette période les vannes V3, V4 et V5 sont fermées. L'effluent du réacteur R1 a est envoyé par la conduite 23, la conduite 26 comportant une vanne V2 ouverte et la conduite 22' dans le réacteur de garde R1b renfermant un lit fixe B de catalyseur. L'effluent du réacteur R1b est envoyé par les conduites 24 et 24' comportant une vanne V6 ouverte et la conduite 13 à la section d'hydrotraitement principale 14.
Au fur et à mesure, les zones de gardes, et notamment la première zone de garde mise en contact avec la charge (R1a) vont se colmater et/ou se désactiver. On observe alors une montée en perte de charge et/ou une perte d'efficacité catalytique nécessitant l'augmentation de la température. On procède alors a l'étape a'), durant laquelle une partie de la charge continue à traverser la zone R1a et une autre partie de la charge est introduite dans la zone R1b. Ainsi, une partie de la charge est introduite par la ligne 3 et les lignes 21 et 21' comportant une vanne V1 (aussi appelée vanne principale) ouverte vers le réacteur de garde R1 a et une autre partie de la charge est introduite par la ligne 3 et les lignes 22 et 22' comportant une vanne V3 (aussi appelée vanne de basculement) ouverte vers la zone de garde R1b. Durant cette période les vannes V4 et V5 sont fermées. L'effluent du réacteur R1a est envoyé par la conduite 23, la conduite 26 comportant une vanne V2 ouverte et la conduite 22' dans le réacteur de garde R1b, rejoignant ainsi l'autre partie de la charge introduite directement. L'effluent du réacteur R1b est envoyé par les conduites 24 et 24' comportant une vanne V6 ouverte et la conduite 13 à la section d'hydrotraitement principale 14. L'étape a') procède jusqu'à la valeur limite de la perte de charge et/ou de la température soit atteinte pour la zone R1a.
On procède alors à l'étape b) au cours de laquelle la charge traverse le réacteur R1b uniquement, le réacteur R1a étant court-circuité pour régénération et/ou remplacement du catalyseur. Ainsi, selon la figure 1, les vannes V1, V2, V4 et V5 sont fermées et la charge est introduite par la ligne 3 et les lignes 22 et 22' comportant une vanne V3 ouverte vers le réacteur R1 b. Durant cette période l'effluent du réacteur R1 b est envoyé par les conduites 24 et 24' comportant une vanne V6 ouverte et la conduite 13 à la section d'hydrotraitement principale 14. Après la reconnexion du réacteur R1a dont le catalyseur a été régénéré ou remplacé en aval du réacteur R1 b, on procède alors à l'étape c) du procédé au cours de laquelle la charge traverse successivement le réacteur R1b, puis le réacteur R1a. Au cours de cette étape c), les vannes V1, V2 et V6 sont fermées et les vannes V3, V4 et V5 sont ouvertes. La charge est introduite par la ligne 3 et les lignes 22 et 22' vers le réacteur R1b. L'effluent du réacteur R1b est envoyé par la conduite 24, la conduite 27 comportant une vanne V4 ouverte et la conduite 21' dans le réacteur de garde R1a. L'effluent du réacteur R1a est envoyé par les conduites 23 et 23' comportant une vanne V5 ouverte et la conduite 13 à la section d'hydrotraitement principale 14. Au fur et à mesure, les zones de gardes, et notamment la première zone de garde mise en contact avec la charge (R1b) vont se colmater et/ou se désactiver. On procède alors de la même manière que dans l'étape a') à un basculement partiel de la charge vers la prochaine zone de garde en aval, nommée étape c'). Ainsi, selon la figure 1, on ouvre en plus la vanne V1 de la zone R1a. Ainsi, une partie de la charge est introduite par la ligne 3 et les lignes 22 et 22' comportant une vanne V3 (aussi appelée vanne principale) ouverte vers le réacteur de garde R1b et une autre partie de la charge est introduite par la ligne 3 et les lignes 21 et 21' comportant une vanne V1 ouverte (aussi appelée vanne de basculement) vers la zone de garde R1a. Durant cette période les vannes V2 et V6 sont fermées. L'effluent du réacteur R1b est envoyé par la conduite 24, la conduite 27 comportant une vanne V4 ouverte et la conduite 21' dans le réacteur de garde R1a, rejoignant ainsi l'autre partie de la charge introduite directement. L'effluent du réacteur R1a est envoyé par les conduites 23 et 23' comportant une vanne V5 ouverte et la conduite 13 à la section d'hydrotraitement principale 14. L'étape c') procède jusqu'à la valeur limite de la perte de charge et/ou de la température soit atteinte pour la zone R1b.
On procède alors à l'étape d) au cours de laquelle la charge traverse le réacteur R1a uniquement, le réacteur R1b étant court-circuité pour régénération et/ou remplacement du catalyseur. Ainsi, selon la figure 1, les vannes V2, V3, V4 et V6 sont fermées et les vannes V1 et V5 sont ouvertes. La charge est introduite par la ligne 3 et les lignes 21 et 21' vers le réacteur R1a. Durant cette période l'effluent du réacteur R1a est envoyé par les conduites 23 et 23' comportant une vanne V5 ouverte et la conduite 13 à la section d'hydrotraitement principale 14.
Le cycle recommence ensuite de nouveau. Les opérations sur les vannes de l'unité permettant le fonctionnement des réacteurs permutables selon l'invention sont reportées au tableau 2.

**Tableau 2 : Opérations sur les vannes pour le système de réacteurs permutables selon l'invention**

| Étape Cycle | | Intervention | V1 | V2 | V3 | V4 | V5 | V6 |
|---|---|---|---|---|---|---|---|---|
| a | R1A + R1B | - | O* | O | F** | F | F | O |
| a' | R1A + R1B | - | O | O | O | F | F | O |
| b | R1B | R1A | F | F | O | F | F | O |
| c | R1B + R1A | - | F | F | O | O | O | F |
| c' | R1B + R1A | - | O | F | O | O | O | F |
| d | R1A | R1B | O | F | F | F | O | F |
| a | R1A + R1B | - | O | O | F | F | F | O |

| | | | | | | | | |
|---|---|---|---|---|---|---|---|---|
| * O = ouvert, **F = fermé | | | | | | | | |

De préférence, la partie de la charge introduite dans la prochaine zone de garde en aval durant les étapes a') et c') ne dépasse pas 50% de la charge totale. La valeur maximale de l'ouverture de la vanne alimentant la prochaine zone en aval (vanne de basculement) est alors de 50%. En effet, lorsqu'on introduit plus de 50% de la charge dans la prochaine zone en aval (et qu'on introduit donc moins de 50% dans la première zone mise en contact avec la charge), il y a un risque qu'à un moment les deux zones se colmatent et/ou se désactivent au même moment en atteignant simultanément la valeur maximale de perte de charge et/ou de la température. Ceci peut entraîner le dysfonctionnement du cycle des permutables. En effet, pour assurer le bon fonctionnement des deux réacteurs en continu, il faut avoir assez de temps pour l'étape de régénération et/ou remplacement du catalyseur (étape b) et d)) d'un réacteur avant que l'autre réacteur atteigne la valeur limite de la perte de charge et/ou de la température nécessitant le remplacement de son catalyseur.

Plusieurs paramètres opératoires permettent d'optimiser le temps de fonctionnement de chaque zone de garde, en optimisant notamment la façon d'introduire simultanément la charge dans deux zones de garde voisines durant les étapes a') et c'). Ces paramètres concernent :
- le moment du début de l'étape de basculement,
- la quantité de charge introduite sur la prochaine zone de garde en aval en début de l'étape de basculement (ouverture initiale de la vanne de basculement)
- l'augmentation progressive de la quantité de charge introduite sur la prochaine zone en aval pendant l'étape de basculement (ouverture progressive de la vanne de basculement).

Le moment de basculement correspond au moment où l'on commence à introduire une partie de la charge sur la prochaine zone en aval, tout en continuant d'alimenter la première zone mise en contact avec la charge. Ce temps est de préférence entre 30 et 95 %, et encore préférentiellement entre 60 et 90 % du temps de désactivation et/ou de colmatage de la première zone de garde mise en contact avec la charge. En effet, la durée de cycle augmente d'autant plus que le moment de basculement se fait tardivement, c'est-à-dire à un moment ou la zone en première position est déjà bien remplie de colmatants.
Un autre paramètre permettant d'optimiser le temps de fonctionnement est la quantité de charge introduite dans la prochaine zone en aval en début des étapes de basculement a') et c'). Les vannes de basculement (V3 dans l'étape a') et V1 dans l'étape c')) permettent de contrôler la quantité de charge introduite sur la prochaine zone en aval. La quantité de la charge continuant à être introduite dans la première zone mise en contact avec la charge est d'autant plus réduite (par le contrôle des vannes principales V1 de l'étape a') et V3 de l'étape c'). La partie de la charge introduite dans la prochaine zone en aval en début des étapes a') et c') est entre 0 et 50%, de préférence entre 20 et 40% de la charge totale, exprimé en %volume. La valeur minimale de 0% d'introduction de charge en début d'étape nécessite une augmentation de la quantité de charge introduite par la suite. De préférence, on évitera une introduction de plus de 50% de la charge sur la prochaine zone en aval pour les raisons de risque de colmatage simultané des deux zones évoquées ci-dessus.
Un autre paramètre important permettant d'optimiser le temps de fonctionnement est l'augmentation de la quantité de charge introduite sur la prochaine zone en aval pendant les étapes a') et c'). De préférence, ladite partie de la charge introduite dans la prochaine zone de garde en aval augmente durant les étapes a') et c') d'une manière progressive ce qui s'exprime par une ouverture progressive de la vanne de basculement en même temps qu'une fermeture progressive de la vanne principale de la même ampleur. L'augmentation progressive peut se faire en continu ou par paliers. L'augmentation de la quantité de charge introduite dans la prochaine zone en aval peut se définir par un pourcentage d'augmentation par pourcentage de temps de désactivation et/ou de colmatage de la première zone mise en contact avec la charge. De préférence, elle est entre 0,02 et 4%, de préférence entre 0,02 et 1% par % de temps de désactivation et/ou de colmatage. De préférence, on évitera une augmentation menant à introduire plus de 50% de la charge sur la prochaine zone en aval pour les raisons de risque de colmatage simultané des deux zones évoquées ci-dessus.

Dans une forme préférée de réalisation on utilise une section de conditionnement du catalyseur permettant la permutation en marche de ces zones de garde, c'est-à-dire sans arrêter le fonctionnement de l'unité : tout d'abord, un système qui fonctionne à pression modérée (de 10 à 50 bars, mais de préférence de 15 à 25 bars) permet d'assurer les opérations suivantes sur le réacteur de garde déconnecté : lavage, strippage, refroidissement, avant déchargement du catalyseur usé ; puis chauffage et sulfuration après chargement du catalyseur frais ; ensuite un autre système de pressurisation/dépressurisation et de robinets-vannes de technologie appropriée permet effectivement de permuter ces zones de garde sans arrêter l'unité, c'est-à-dire sans affecter le facteur opératoire, puisque toutes les opérations de lavage, strippage, déchargement du catalyseur usé, rechargement du catalyseur frais, chauffage, sulfuration se font sur le réacteur ou zone de garde déconnectée. Alternativement, un catalyseur pré-activité peut être utilisé dans la section de conditionnement de manière à simplifier la procédure de permutation en marche.

Chaque zone de garde contient au moins un lit catalytique (par exemple 1, 2, 3, 4, ou 5 lits catalytiques). De préférence, chaque zone de garde contient un lit catalytique. Chaque lit catalytique contient au moins une couche catalytique contenant un ou plusieurs catalyseurs, éventuellement complété par au moins une couche inerte. Les catalyseurs utilisés dans le ou les lit(s) catalytique(s) peuvent être identiques ou différents.

Le procédé d'hydrotraitement par les réacteurs permutables permet ainsi d'augmenter sensiblement la durée d'un cycle. Durant les étapes a') et c') une partie de la charge subit un temps de séjour écourté dans les réacteurs permutables car court-circuitant la première zone. Afin de maintenir le taux d'hydrotraitement constant en sortie du dernier réacteur, la température dans les zones est ainsi progressivement augmentée. Cette dernière est également globalement augmentée lors du cycle pour contrer la désactivation du catalyseur. Néanmoins, cette augmentation de la température favorise le dépôt de coke accélérant les processus de colmatage. Ainsi, pour limiter une augmentation de température trop élevée, la fraction introduite dans la prochaine zone de garde durant les étapes a') et c)' doit être limitée. La quantité de la charge introduite dans la prochaine zone en aval découle ainsi d'une optimisation entre gain de temps de cycle et augmentation limitée de la température.

Selon une variante préférée, la charge traverse à l'entrée de chaque zone de garde un plateau distributeur filtrant composé d'un seul étage ou de deux étage successifs, ledit plateau est situé en amont du ou des lit(s) catalytique(s).Ce plateau filtrant, décrit dans le brevet US2009177023, permet de piéger les particules colmatantes contenues dans la charge au moyen d'un plateau distributeur spécifique comportant un milieu filtrant. Ainsi, le plateau filtrant permet d'augmenter le gain de temps dans le procédé d'hydrotraitement utilisant les zones de garde permutables. Ce plateau filtrant permet simultanément de distribuer la phase gaz (l'hydrogène et la partie gazeuse de la charge) et la phase liquide (la partie liquide de la charge) alimentant le réacteur tout en assurant une fonction de filtration vis à vis des impuretés contenues dans la charge. De même, le plateau filtrant assure une distribution du mélange plus homogène sur toute la surface du lit catalytique et limite les problèmes de maldistribution, pendant la phase de colmatage du plateau lui même.

Plus précisément, le plateau filtrant est un dispositif de filtration et de distribution, ledit dispositif comprenant un plateau situé en amont du lit catalytique, ledit plateau étant constitué d'un plan de base sensiblement horizontal et solidaire des parois du réacteur et auquel sont fixées des cheminées sensiblement verticales, ouvertes à leur extrémité supérieure pour l'admission du gaz, et à leur extrémité inférieure pour l'évacuation du mélange gaz liquide destiné à alimenter le lit catalytique situé en aval, lesdites cheminées étant percées sur une certaine fraction de leur hauteur d'une fente latérale continue ou d'orifices latéraux pour l'admission du liquide, ledit plateau supportant un lit de filtration entourant les cheminées, et ledit lit de filtration étant constitué d'au moins une couche de particules de taille inférieure ou égale à la taille des particules du lit catalytique. Le lit de filtration est constitué de particules généralement inertes mais peut également comprendre au moins une couche de catalyseur identique ou appartenant à la même famille que le catalyseur du lit catalytique. Cette dernière variante permet de réduire le volume de lits catalytiques dans le réacteur.

Le plateau distributeur filtrant peut également comprendre deux étages et être composé de deux plateaux successifs : le premier plateau supportant un lit de garde composés de particules internes et d'au moins une couche de catalyseur identique ou appartenant à la même famille que le catalyseur du lit catalytique. Ce plateau est décrit dans le brevet US2009177023. Le lit est disposé sur une grille, la phase liquide s'écoule au travers du lit de garde et le gaz au travers de cheminées traversant le lit de garde et le premier plateau. En fin de colmatage le liquide et le gaz s'écoulent simultanément au travers des cheminées tout en permettant au deuxième plateau de continuer à assurer sa fonction de distribution. Le deuxième plateau assure la fonction de distribution du gaz et du liquide : il peut être composé de cheminées avec des perforations latérales pour le passage du liquide ou composé de « bubble-cap » ou « vapor-lift ».

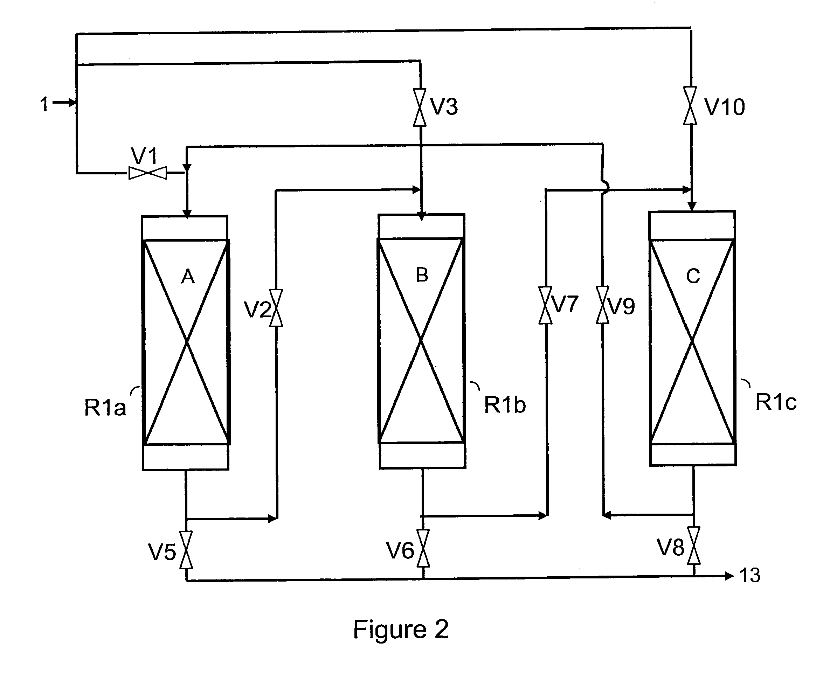

Selon une autre variante, le procédé d'hydrotraitement selon la présente invention peut comprendre plus de deux réacteurs permutables (par exemple 3, 4 ou 5) fonctionnant selon le même principe de permutation et de basculement partiel de flux.
Dans le cas représenté sur la figure 2, ou la zone de garde comporte 3 réacteurs, le procédé comprendra, dans sa forme préférée de réalisation, une série de cycles comportant chacun neuf étapes successives :
- une étape a) au cours de laquelle la charge traverse successivement le réacteur R1a, puis le réacteur R1b et enfin le réacteur R1c,
- une étape a') (étape de basculement) au cours de laquelle une partie de la charge continu à traverser le réacteur R1a, puis le réacteur R1b, une autre partie de la charge est introduite directement dans le réacteur R1b, puis la totalité de la charge traverse le réacteur R1 c,
- une étape b) au cours de laquelle la charge traverse le réacteur R1 b, puis le réacteur R1c, le réacteur R1a étant court-circuité pour régénération et/ou remplacement du catalyseur,
- une étape c) au cours de laquelle la charge traverse successivement le réacteur R1b, puis le réacteur R1c et enfin le réacteur R1a,
- une étape c') (étape de basculement) au cours de laquelle une partie de la charge continu à traverser le réacteur R1b, puis le réacteur R1c, une autre partie de la charge est introduite directement dans le réacteur R1c, puis la totalité de la charge traverse le réacteur R1a,
- une étape d) au cours de laquelle la charge traverse le réacteur R1c, puis le réacteur R1a, le réacteur R1b étant court-circuité pour régénération et/ou remplacement du catalyseur,
- une étape e) au cours de laquelle la charge traverse successivement le réacteur R1c, puis le réacteur R1a et enfin le réacteur R1b,
- une étape e') (étape de basculement) au cours de laquelle une partie de la charge continu à traverser le réacteur R1c, puis le réacteur R1a, une autre partie de la charge est introduite directement dans le réacteur R1a, puis la totalité de la charge traverse le réacteur R1b,
- une étape f) au cours de laquelle la charge traverse le réacteur R1a, puis le réacteur R1 b, le réacteur R1 c étant court-circuité pour régénération et/ou remplacement du catalyseur.

Dans le cas schématisé sur cette figure 2 le procédé fonctionne de manière équivalente à celle décrite en liaison avec la figure 1 (les signes de référence pour les lignes n'on pas été repris pour des questions de lisibilité).
Au cours de l'étape a) les vannes V1, V2, V7 et V8 sont ouvertes et les vannes V3, V5, V6, V9 et V10 sont fermées.
Au cours de l'étape a') les vannes V1, V2, V3, V7 et V8 sont ouvertes et les vannes V5, V6, V9 et V10 sont fermées.
Au cours de l'étape b) les vannes V3, V7 et V8 sont ouvertes et les vannes V1, V2, V5, V6, V9 et V10 sont fermées.
Au cours de l'étape c) les vannes V3, V7, V9 et V5 sont ouvertes et les vannes V1, V2, V6, V8 et V10 sont fermées.
Au cours de l'étape c') les vannes V3, V10, V7, V9 et V5 sont ouvertes et les vannes V1, V2, V6 et V8 sont fermées.
Au cours de l'étape d) les vannes V10, V9 et V5 sont ouvertes et les vannes V1, V2, V3, V6, V7 et V8 sont fermées.
Au cours de l'étape e) les vannes V10, V9, V2 et V6 sont ouvertes et les vannes V1, V3, V5, V7 et V8 sont fermées.
Au cours de l'étape e') les vannes V10, V1, V9, V2 et V6 sont ouvertes et les vannes V3, V5, V7 et V8 sont fermées.
Au cours de l'étape f) les vannes V1, V2 et V6 sont ouvertes et les vannes V3, V5, V7, V8, V9 et V10 sont fermées.

Les différentes variantes du procédé décrit ci-dessus pour un système de deux réacteurs permutables s'appliquent également sur un système ayant plus de deux réacteurs permutables. Ces différentes variantes sont notamment: le système de conditionnement, la possibilité d'avoir plus de deux lits catalytiques par réacteurs, le moment de basculement, la quantité de la charge introduite initialement dans la prochaine zone en aval et son augmentation progressive avec le temps, le maintien du taux d'HDM par augmentation de la température et l'intégration d'un plateau filtrant à l'entrée de chaque réacteur.

Le procédé selon l'invention peut avantageusement être mis en oeuvre à une température comprise entre 320°C et 430°C, de préférence 350°C à 410°C, sous une pression partielle en hydrogène avantageusement comprise entre 3 MPa et 30 MPa, de préférence entre 10 et 20 MPa, à une vitesse spatiale (WH) avantageusement comprise entre 0,05 et 5 volume de charge par volume de catalyseur et par heure, et avec un rapport hydrogène gazeux sur charge liquide d'hydrocarbures avantageusement compris entre 200 et 5000 normaux mètres cubes par mètres cubes, de préférence 500 à 1500 normaux mètres cubes par mètres cubes. La valeur de la WH de chaque réacteur permutable en fonctionnement est de préférence d'environ 0,5 à 4 h⁻¹ et le plus souvent d'environ 1 à 2 h⁻¹. La valeur de WH globale des réacteurs permutables et celle de chaque réacteur est choisie de manière à réaliser le maximum d'HDM tout en contrôlant la température de réaction (limitation de l'exothermicité).

Les catalyseurs d'hydrotraitement utilisés sont de préférence des catalyseurs connus et sont généralement des catalyseurs granulaires comprenant, sur un support, au moins un métal ou composé de métal ayant une fonction hydrodéshydrogénante. Ces catalyseurs sont avantageusement des catalyseurs comprenant au moins un métal du groupe VIII, choisi généralement dans le groupe formé par le nickel et/ou le cobalt, et/ou au moins un métal du groupe VIB, de préférence du molybdène et/ou du tungstène. Le support utilisé est généralement choisi dans le groupe formé par l'alumine, la silice, les silices-alumines, la magnésie, les argiles et les mélanges d'au moins deux de ces minéraux.
Préalablement à l'injection de la charge, les catalyseurs utilisés dans le procédé selon la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur, soit ex-situ.

Les charges traitées dans le procédé selon l'invention sont avantageusement choisies parmi les résidus atmosphériques, les résidus sous vide issus de distillation directe, des pétroles bruts, des pétroles bruts étêtés, les huiles désasphaltées, les résidus issus des procédés de conversion tels que par exemple ceux provenant du coking, d'une hydroconversion en lit fixe, en lit bouillonnant, ou encore en lit mobile, les huiles lourdes de toute origine et en particulier issues de sables ou schistes bitumineux, pris seuls ou en mélange. Ces charges peuvent avantageusement être utilisées telles quelles ou encore diluées par une fraction hydrocarbonée ou un mélange de fractions hydrocarbonées pouvant être choisies parmi les produits issus d'un procédé de craquage catalytique en lit fluide (FCC selon les initiales de la dénomination anglo-saxonne de « Fluid Catalytic Cracking »), une huile de coupe légère (LCO selon les initiales de la dénomination anglo-saxonne de « Light Cycle Oil »), une huile de coupe lourde (HCO selon les initiales de la dénomination anglo-saxonne de « Heavy Cycle Oil »), une huile décantée (DO selon les initiales de la dénomination anglo-saxonne de « Decanted Oil »), un résidu de FCC, ou pouvant venir de la distillation, les fractions gazoles notamment celles obtenues par distillation sous vide dénommée selon la terminologie anglo-saxonne VGO (« Vacuum Gas Oil »). Les charges lourdes peuvent aussi avantageusement comprendre des coupes issues du procédé de liquéfaction du charbon, des extraits aromatiques, ou toutes autres coupes hydrocarbonées ou encore des charges non pétrolières telles que des dérivés gazeux et/ou liquides (ne contenant pas ou peu de solides) de la conversion thermique (avec ou sans catalyseur et avec ou sans hydrogène) du charbon, de la biomasse ou des déchets industriels comme par exemple les polymères recyclés.
Lesdites charges lourdes présentent généralement plus de 1% en poids de molécules ayant un point d'ébullition supérieur à 500°C, une teneur en métaux Ni+V supérieure à 1 ppm poids, de préférence supérieure à 20 ppm poids, une teneur en asphaltènes, précipité dans l'heptane, supérieure à 0,05 % en poids, de préférence, supérieure à 1 % en poids.

Le procédé d'hydrotraitement selon l'invention permet d'effectuer 50 % et plus d'HDM de la charge à la sortie des réacteurs permutables (et plus précisément de 50 à 95 % d'HDM) grâce à la WH choisie et l'efficacité du catalyseur d'HDM.

Le procédé d'hydrotraitement selon l'invention employant le système de zones de garde permutables incluant au moins une étape de permutation progressive précède avantageusement un procédé d'hydrotraitement de charges hydrocarbonées lourdes en lit fixe ou lit bouillonnant.
De préférence, il précède le procédé Hyvahl-F™ de la demanderesse comprenant au moins une étape d'hydrodémétallation et au moins une étape d'hydrodésulfuration, Le procédé selon l'invention est de préférence intégré en amont de la section d'HDM, les réacteurs permutables étant utilisées comme lits de gardes. Dans le cas représenté sur la figure 1, la charge 1 arrive dans le ou les réacteurs permutables de garde par la conduite 1 et ressort de ce ou ces réacteurs par la conduite 13. La charge sortant du ou des réacteur(s) de garde arrive par la conduite 13 dans la section d'hydrotraitement 14 et plus précisément dans la section d'HDM 15 comprenant un ou plusieurs réacteurs. L'effluent de la section d'HDM 15 est soutiré par la conduite 16, puis envoyé dans la section d'HDT 17 comprenant un ou plusieurs réacteurs. L'effluent final est soutiré par la conduite 18.

### Exemple 1 (non conforme à l'invention)

La charge est constituée d'un mélange (70/30% pds) de résidu atmosphérique (RA) d'origine Moyen Orient (Arabian Medium) et d'un résidu sous vide(VR) d'origine Moyen Orient (Arabian Light). Ce mélange se caractérise par une viscosité élevée (0.91 cP) à température ambiante, une densité de 994 kg/m³, de fortes teneurs en carbone conradson (14% en poids) et asphaltènes (6% en poids) et une quantité élevée de nickel (22 ppm en poids), vanadium (99 ppm en poids) et soufre (4,3 % en poids).
Le procédé d'hydrotraitement est mené selon le procédé décrit dans FR2681871 et comporte l'utilisation de deux réacteurs permutables. Les deux réacteurs sont chargés avec un catalyseur d'hydrodémétallation HDM CoMoNi/alumine. Un cycle se définit comme intégrant les étapes de a) à d). Le temps de désactivation et/ou de colmatage est atteint quand la perte de charge atteint 0.7 MPa (7bars) et/ou la température moyenne d'un lit atteint 405°C et/ou lorsque l'écart de température sur un lit catalytique devient inférieure à 5°C.

Le procédé s'effectue sous une pression de 19 MPa, une température en début de cycle de 360°C et en fin de cycle de 400°C, et une VVH = 2h⁻¹ par réacteur permettant de maintenir un taux de démétallation voisin de 60 %.

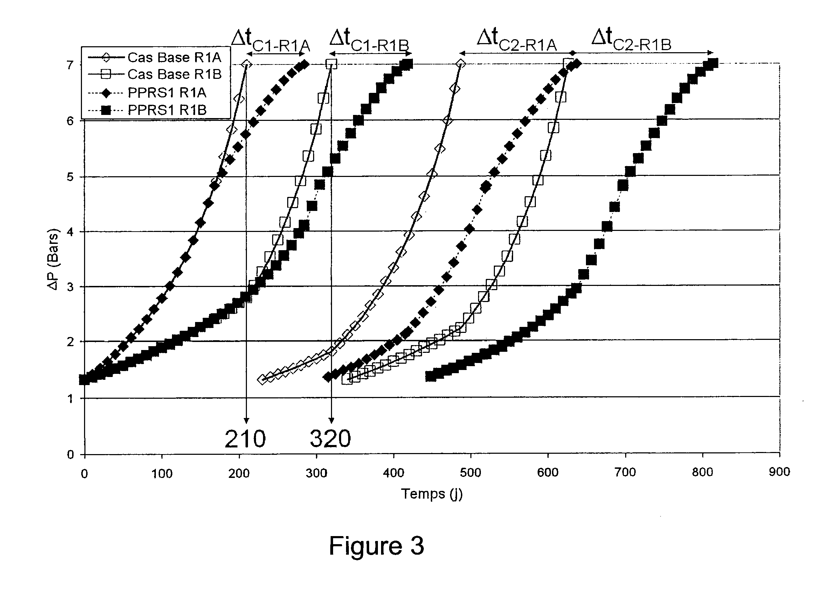

Le tableau 3 et la figure 3 montre la durée de fonctionnement (en jours) pour le procédé selon FR 2681871. Ainsi, selon la figure 3, la courbe du réacteur R1a selon l'état de l'art (cas base R1a) montre au début du cycle une augmentation de la perte de charge dans le premier réacteur R1a jusqu'à sa valeur maximalement tolérable (Δp = 0,7 MPa ou 7 bars) à partir de laquelle il faut procéder au remplacement du catalyseur. Dans le cas de l'état de l'art (FR268187), le temps de fonctionnement du réacteur R1a est donc de 210 jours. Lors du remplacement du catalyseur du réacteur R1 a, la perte de charge dans le réacteur R1 b a atteint environ 3 bars. Au cours de la phase suivante où la charge traverse le réacteur R1b puis le réacteur R1a contenant un catalyseur neuf, la perte de charge du réacteur R1b augmente jusqu'à la valeur maximale tolérable, qui est atteinte après 320 jours de fonctionnement. Un deuxième cycle peut être envisagé sur ces réacteurs permutables, en remplaçant le catalyseur du réacteur R1b.

Le temps de désactivation et/ou de colmatage (ou la durée de fonctionnement) de la première zone est donc de 210 jours. Au total, on observe une durée de cycle de 320 jours pour le premier cycle et de 627 jours pour deux cycles.

### Exemple 2 (conforme à l'invention)

Le procédé d'hydrotraitement est répété avec la même charge, le même catalyseur et sous les mêmes conditions opératoires selon l'exemple 1, sauf qu'on procède à un basculement selon l'invention à 80% du temps de désactivation et/ou de colmatage de la première zone (soit à 168 jours (80 % x 210 jours)). Le pourcentage de la charge introduite dans la deuxième zone de garde en début de l'étape a') ou c') est de 0% avec une augmentation de 0.7% par % de temps de désactivation et/ou de colmatage. Le taux d'HDM est maintenu à 60 %.

Le tableau 3 et la figure 3 montre le gain en temps de fonctionnement (en jours) pour le procédé selon l'invention (exemple 2) et pour le procédé selon l'état de l'art (exemple 1).

**Tableau 3 : Gain en durée de fonctionnement (jours)**

| Cas | Exemple 1 (non conforme) (jours) | Exemple 2 (conforme à l'invention) (jours) | Différence (jours) | Différence (%) |
|---|---|---|---|---|
| Durée R1a Cycle 1 | 210 | 285 | 75 | 36 |
| Durée R1b Cycle 1 | 320 | 418 | 98 | 31 |
| Durée R1a Cycle 2 | 487 | 637 | 150 | 31 |
| Durée R1b Cycle 2 | 627 | 814 | 187 | 30 |

La figure 3 donne l'évolution de la perte de charge au cours du temps mesurée dans les zones R1a et R1b selon l'état de l'art (FR268187) et selon l'invention.
Selon la présente invention on ajoute, à 80 % du temps de désactivation et/ou de colmatage de R1a (soit 168 jours), une étape durant laquelle on introduit simultanément une partie de la charge dans le réacteur R1a et le réacteur R1b (cas PPRS1 R1a). On observe alors que la perte de charge monte moins rapidement (bifurcation des courbes R1a selon l'état de l'art et selon l'invention), ce qui permet d'atteindre la valeur maximale de la perte de charge (Δp = 0,7 MPa ou 7 bars) plus tard et donc d'allonger le temps de fonctionnement du réacteur R1a à 285 jours (Δt_{C1-R1a} = 75 jours)). La perte de charge du réacteur R1a chute ensuite brutalement car le système passe en étape b) durant laquelle le catalyseur du réacteur R1a est régénéré et/ou remplacé. La charge traverse alors uniquement le réacteur R1 b, puis R1b et R1a après le remplacement. Le remplacement du catalyseur prend généralement 20 jours. La courbe R1b montre la perte de charge du deuxième réacteur R1b en fonction du temps (cas de base R1b et PPRS1 R1b selon l'invention). On observe le même phénomène de gain de temps à la fin de l'étape c') : Δt_{C1- R1b} = 98 jours. Ainsi, le temps de fonctionnement du réacteur R1b est de 418 jours, ce qui représente un gain de temps d'environ 30 % de temps de fonctionnement.

La figure 3 montre également un deuxième cycle des réacteurs permutables. Le gain du temps après 2 cycles successifs est alors Δt_{C2-R1a} =150 jours après l'étape a') et Δt_{C2-R1b} = 187 jours après l'étape c'). On observe que plus il y a de cycles, plus le gain de temps est important, car le temps gagné au premier cycle s'additionne à celui du deuxième.

Il apparaît donc que le procédé d'hydrodémétallation selon l'invention permet d'augmenter la durée de vie d'un cycle d'environ 30 % tout en maintenant un taux d'HDM de 75% équivalent au taux d'HDM selon le procédé de l'état de l'art.

## Revendications

1. Procédé d'hydrotraitement d'une fraction lourde d'hydrocarbures contenant des asphaltènes, des sédiments, des impuretés soufrées, azotées et métalliques, dans lequel on fait passer, dans des conditions d'hydrotraitement, la charge d'hydrocarbures et d'hydrogène sur un catalyseur d'hydrotraitement, dans au moins deux zones de garde d'hydrotraitement en lits fixes contenant chacune au moins un lit catalytique, les zones de garde étant disposées en série pour être utilisées de façon cyclique consistant en la répétition successive des étapes b), c) et c') définies ci-après :
- une étape a) durant laquelle la charge traverse toutes les zones de garde pendant une fraction du temps de désactivation et/ou de colmatage de la première zone de garde mise en contact avec la charge,
- une étape a') durant laquelle une partie de la charge continue à traverser la première zone de garde mise en contact avec la charge et une autre partie de la charge est introduite dans la prochaine zone de garde en aval pendant une durée au plus égale au temps de désactivation et/ou de colmatage de la première zone de garde mise en contact avec la charge,
- une étape b) durant laquelle la zone de garde désactivée et/ou colmatée est court-circuitée et le catalyseur qu'elle contient est régénéré et/ou remplacé par du catalyseur frais et durant laquelle la ou les autres zones(s) de garde sont utilisée(s),
- une étape c) durant laquelle la charge traverse toutes les zones de garde, la zone de garde dont le catalyseur a été régénéré au cours de l'étape précédente étant reconnectée de manière à être en aval de l'ensemble des autres zones de gardes et ladite étape étant poursuivie pendant une fraction du temps de désactivation et/ou de colmatage de la première zone de garde mise en contact avec la charge,
- une étape c') durant laquelle une partie de la charge continue à traverser la première zone de garde mise en contact avec la charge et une autre partie de la charge est introduite dans la prochaine zone de garde en aval pendant une durée au plus égale au temps de désactivation et/ou de colmatage de la première zone de garde mise en contact avec la charge.

2. Procédé selon la revendication 1, dans lequel durant les étapes a') et c') ladite partie de la charge introduite dans la prochaine zone de garde en aval ne dépasse pas 50 % de la charge totale.

3. Procédé selon la revendication 1 ou 2, dans lequel durant les étapes a') et c') ladite partie de la charge introduite dans la prochaine zone de garde en aval augmente d'une manière progressive.

4. Procédé selon la revendication précédente, dans lequel l'augmentation progressive est effectuée en continu ou par paliers.

5. Procédé selon les revendications 3 et 4, dans lequel l'augmentation de la partie de la charge introduite dans la prochaine zone de garde en aval est de 0,02 à 4% par % de temps de désactivation et/ou de colmatage.

6. Procédé selon les revendications 3 et 4, dans lequel l'augmentation de la partie de la charge introduite dans la prochaine zone de garde en aval est de 0,02 à 1% par % de temps de désactivation et/ou de colmatage.

7. Procédé selon l'une des revendications précédentes, dans lequel les étapes a) et c) s'effectuent pendant une durée entre 30 et 95% du temps de désactivation et/ou de colmatage de la première zone de garde mise en contact avec la charge.

8. Procédé selon l'une des revendications précédentes, dans lequel les étapes a) et c) s'effectuent pendant une durée entre 60 et 90% du temps de désactivation et/ou de colmatage de la première zone de garde mise en contact avec la charge.

9. Procédé selon l'une des revendications précédentes, dans lequel ladite autre partie de la charge introduite au début des étapes a') et c') dans la prochaine zone de garde en aval est de 0 à 50 % de la charge totale, exprimé en %volume.

10. Procédé selon l'une des revendications précédentes, dans lequel ladite autre partie de la charge introduite au début des étapes a') et c') dans la prochaine zone de garde en aval est de 20 à 40 % de la charge totale, exprimé en %volume.

11. Procédé selon l'une des revendications précédentes dans lequel le taux d'hydrotraitement est maintenu par une augmentation de la température.

12. Procédé selon l'une des revendications précédentes dans lequel la charge traverse à l'entrée de chaque zone de garde un plateau distributeur filtrant composé d'un seul étage ou de deux étage successifs, ledit plateau est situé en amont du ou des lit(s) catalytique(s).

13. Procédé selon l'une des revendications précédentes **caractérisé en ce qu'**il précède un procédé d'hydrotraitement en lit fixe ou lit bouillonnant.

## Patentansprüche

1. Verfahren zur Wasserstoffbehandlung einer schweren Kohlenwasserstofffraktion, enthaltend Asphaltene, Sedimente, schwefelhaltige, stickstoffhaltige und metallische Verunreinigungen, wobei die Kohlenwasserstoffcharge und Wasserstoff unter Wasserstoffbehandlungsbedingungen auf einen Wasserstoffbehandlungskatalysators in mindestens zwei Wasserstoffbehandlungsschutzzonen in Festbetten geleitet werden, die jeweils mindestens ein Katalysebett enthalten, wobei die Schutzzonen zur zyklischen Verwendung in Reihe angeordnet sind, die darin besteht, dass die nachfolgend definierten Schritte b), c) und c') nacheinander wiederholt werden:
- ein Schritt a), in dessen Verlauf die Charge alle Schutzzonen während eines Bruchteils der Deaktivierungs- und/oder Verstopfungszeit der ersten Schutzzone durchläuft, die mit der Charge in Kontakt gebracht wird,
- ein Schritt a'), in dessen Verlauf ein Teil der Charge weiterhin die erste, mit der Charge in Kontakt gebrachte Schutzzone durchläuft und ein anderer Teil der Charge in die nächste, stromabwärts gelegene Schutzzone eingeführt wird, während eines Zeitraums, der höchstens gleich der Deaktivierungs- und/oder Verstopfungszeit der ersten mit der Charge in Kontakt gebrachten Schutzzone ist,
- ein Schritt b), ihn dessen Verlauf die deaktivierte und/oder verstopfte Schutzzone ausgeschaltet wird und der Katalysator, den sie enthält, regeneriert und/oder durch frischen Katalysator ersetzt wird, und in dessen Verlauf die andere(n) Schutzzone(n) verwendet wird (werden),
- ein Schritt c), in dessen Verlauf die Charge alle Schutzzonen durchläuft, wobei die Schutzzone, deren Katalysator während des vorhergehenden Schritts regeneriert wurde, wieder angeschlossen wird, so dass sie stromabwärts der Gesamtheit der anderen Schutzzonen liegt, und dieser Schritt während eines Bruchteils der Deaktivierungs- und/oder Verstopfungszeit der ersten, mit der Charge in Kontakt gebrachten Schutzzone fortgesetzt wird,
- ein Schritt c'), in dessen Verlauf ein Teil der Charge weiterhin die erste, mit der Charge in Kontakt gebrachte Schutzzone durchläuft und ein anderer Teil der Charge in die nächste, stromabwärts gelegene Schutzzone eingeführt wird, während eines Zeitraums, der höchstens gleich der Deaktivierungs- und/oder Verstopfungszeit der ersten, mit der Charge in Kontakt gebrachten Schutzzone ist.

2. Verfahren nach Anspruch 1, wobei der Teil der Charge, der während der Schritte a') und c') in die nächste, stromabwärts gelegene Schutzzone eingeführt wird, 50 % der Gesamtcharge nicht übersteigt.

3. Verfahren nach Anspruch 1 oder 2, wobei der Teil der Charge, der während der Schritte a') und c') in die nächste, stromabwärts gelegene Schutzzone eingeführt wird, allmählich zunimmt.

4. Verfahren nach dem vorhergehenden Anspruch, wobei die allmähliche Zunahme kontinuierlich oder stufenweise erfolgt.

5. Verfahren nach den Ansprüchen 3 und 4, wobei die Zunahme des Teils der Charge, der in die nächste, stromabwärts gelegene Schutzzone eingeführt wird, 0,02 bis 4 % pro % Deaktivierungs- und/oder Verstopfungszeit beträgt.

6. Verfahren nach den Ansprüchen 3 und 4, wobei die Zunahme des Teils der Charge, der in die nächste, stromabwärts gelegene Schutzzone eingeführt wird, 0,02 bis 1% pro % Deaktivierungs- und/oder Verstopfungszeit beträgt.

7. Verfahren nach einem der vorhergehenden Ansprüche, wobei die Schritte a) und c) während einer Dauer zwischen 30 und 95 % der Deaktivierungs- und/oder Verstopfungszeit der ersten, mit der Charge in Kontakt gebrachten Schutzzone erfolgen.

8. Verfahren nach einem der vorhergehenden Ansprüche, wobei die Schritte a) und c) während einer Dauer zwischen 60 und 90 % der Deaktivierungs- und/oder Verstopfungszeit der ersten mit der Charge in Kontakt gebrachten Schutzzone erfolgen.

9. Verfahren nach einem der vorhergehenden Ansprüche, wobei der andere Teil der Charge, der zu Beginn der Schritte a') und c') in die nächste, stromabwärts gelegene Schutzzone eingeführt wurde, 0 bis 50 % der Gesamtcharge, ausgedrückt in Vol.-%, beträgt.

10. Verfahren nach einem der vorhergehenden Ansprüche, wobei der andere Teil der Charge, der zu Beginn der Schritte a') und c') in die nächste, stromabwärts gelegene Schutzzone eingeführt wurde, 20 bis 40 % der Gesamtcharge, ausgedrückt in Vol.-%, beträgt.

11. Verfahren nach einem der vorhergehenden Ansprüche, wobei der Wasserstoffbehandlungsgrad durch eine Erhöhung der Temperatur aufrecht erhalten wird.

12. Verfahren nach einem der vorhergehenden Ansprüche, wobei die Charge am Eingang jeder Schutzzone eine Filter-Verteilerplatte durchläuft, die aus einer einzigen Stufe oder aus zwei aufeinander folgenden Stufen besteht, wobei die Platte stromaufwärts des Katalysebetts oder der Katalysebetten liegt.

13. Verfahren nach einem der vorhergehenden Ansprüche, **dadurch gekennzeichnet, dass** ihm ein Wasserstoffbehandlungsverfahren im Festbett oder im Wirbelbett vorausgeht.

## Claims

1. Process for hydrotreating a heavy hydrocarbon fraction containing asphaltenes, sediments, sulphur-containing, nitrogen-containing and metallic impurities, in which the feed of hydrocarbons and hydrogen is passed, under hydrotreating conditions, over a hydrotreating catalyst, in at least two fixed bed hydrotreating guard zones each containing at least one catalyst bed, the guard zones being arranged in series to be used cyclically, consisting of successive repetition of steps b), c) and c') defined below:
- a step a) during which the feed passes through all the guard zones during a fraction of the deactivation time and/or clogging time of the first guard zone brought into contact with the feed,
- a step a') during which a portion of the feed continues to pass through the first guard zone brought into contact with the feed and another portion of the feed is introduced into the next guard zone downstream for a period at most equal to the deactivation time and/or clogging time of the first guard zone brought into contact with the feed,
- a step b) during which the deactivated and/or clogged guard zone is bypassed and the catalyst that it contains is regenerated and/or replaced with fresh catalyst and during which the other guard zone(s) are used,
- a step c) during which the feed passes through all the guard zones, the guard zone of which the catalyst was regenerated during the preceding step being reconnected so as to be downstream of all the other guard zones and said step being continued for a fraction of the deactivation time and/or clogging time of the first guard zone brought into contact with the feed,
- a step c') during which a portion of the feed continues to pass through the first guard zone brought into contact with the feed and another portion of the feed is introduced into the next guard zone downstream for a period at most equal to the deactivation time and/or clogging time of the first guard zone brought into contact with the feed.

2. Process according to claim 1, in which during steps a') and c') said portion of the feed introduced into the next guard zone downstream does not exceed 50% of the total feed.

3. Process according to claim 1 or 2, in which during steps a') and c') said portion of the feed introduced into the next guard zone downstream increases progressively.

4. Process according to the preceding claim, in which the progressive increase is carried out continuously or in stages.

5. Process according to claims 3 and 4, in which the increase in the portion of the feed introduced into the next guard zone downstream is from 0.02 to 4% per % of the deactivation time and/or clogging time.

6. Process according to claims 3 and 4, in which the increase in the portion of the feed introduced into the next guard zone downstream is from 0.02 to 1% per % of the deactivation time and/or clogging time.

7. Process according to one of the preceding claims, in which steps a) and c) are carried out for a period between 30 and 95% of the deactivation time and/or clogging time of the first guard zone brought into contact with the feed.

8. Process according to one of the preceding claims, in which steps a) and c) are carried out for a period between 60 and 90% of the deactivation time and/or clogging time of the first guard zone brought into contact with the feed.

9. Process according to one of the preceding claims, in which said other portion of the feed introduced at the beginning of steps a') and c') into the next guard zone downstream is from 0 to 50% of the total feed, expressed in vol.%.

10. Process according to one of the preceding claims, in which said other portion of the feed introduced at the beginning of steps a') and c') into the next guard zone downstream is from 20 to 40% of the total feed, expressed in vol.%.

11. Process according to one of the preceding claims in which the degree of hydrotreating is maintained by raising the temperature.

12. Process according to one of the preceding claims in which, at the entrance of each guard zone, the feed passes through a filtering distributor plate composed of a single stage or of two successive stages, said plate is situated upstream of the catalyst bed(s).

13. Process according to one of the preceding claims, **characterized in that** it precedes a fixed bed or ebullating bed hydrotreating process.
